# EUROPEAN PATENT SPECIFICATION

(11) **EP 3 549 750 B1**
(45) Date of publication and mention of the grant of the patent: **21.09.2022**
(21) Application number: 17877254.7
(22) Date of filing: 03.11.2017
(51) Int. Cl.: B29C 70/18, B29C 70/40, B29C 70/54, C09J 7/20, C09J 7/21, B29C 70/88

(54) **HEAT RESISTANT COMPOSITE SHEET AND MANUFACTURING METHOD THEREFOR**
HITZEBESTÄNDIGE VERBUNDFOLIE UND HERSTELLUNGSVERFAHREN DAFÜR
FEUILLE COMPOSITE RÉSISTANTE À LA CHALEUR ET PROCÉDÉ DE FABRICATION DE LADITE FEUILLE

(30) Priority: 30.11.2016 CN 201611081446
(43) Date of publication of application: 09.10.2019
(73) Proprietor: Nitto Denko (Shanghai Songjiang) Co., Ltd., Shanghai 201613 (CN); Nitto Denko Corporation, Ibaraki-shi, Osaka 567-8680 (JP)
(72) Inventor: LI, Xu, Shanghai 201613 (CN); WATANABE, Yoshinori, Osaka 567-8680 (JP); TIAN, Song, Shanghai 201613 (CN)
(74) Representative: Müller-Boré & Partner Patentanwälte PartG mbB
(86) International application number: PCT/CN2017/109233
(87) International publication number: WO 2018/099238

(56) References cited:
- WO-A1-2010/061980
- WO-A1-2016/052137
- CN-A- 102 187 030
- CN-A- 102 187 030
- CN-A- 105 153 961

## Description

### TECHNICAL FIELD

The disclosure relates to a heat-resistant composite sheet, and more particularly to a heat-resistant composite sheet which is a glass fiber fabric impregnated with a fluorine-containing resin. The disclosure also relates to a method of manufacturing the heat-resistant composite sheet.

### RELATED ART

A composite sheet of a glass fiber fabric impregnated with a fluorine-containing resin has excellent heat resistance, insulation, corrosion resistance, tack-free properties, and the like, and is used in many fields such as a conveyor belt, a heat-resistant sheet, an anti-corrosion tack-free sheet, and the like. However, no matter the composite sheet is used in what kind of field, the surface of the composite sheet is constantly abraded as the use time increases. It can be seen that how to realize a longer service life of the composite sheet is a problem to be solved.

When an adhesive tape is used in the field of heat sealing, after being attached to a hot plate, the adhesive tape is abraded due to contact between the adhesive tape and the heat sealed article. Since the surface of the existing heat-resistant adhesive tape is uneven, the abrasion is uneven during use, and some of the glass fibers are easily exposed, so the service life is lowered.

Besides, in order to increase the service life of the existing products, the substrate fluororesin layer is thickened, and in general, the processing cost is greatly increased, and the effect is not the best. For example, for an adhesive tape formed by increasing the thickness in a large amount, when it is attached to a hot plate having an angle, the counter force is large after the bending, so that it is not easy to stick and is easily detached from the adherend, resulting in a decrease in the service life of the adhesive tape. Composite sheets comprising impregnated glass fiber fabrics are known from CN102187030A and WO2010061980A1.

### SUMMARY

### Problem to be solved by the disclosure

The object of the disclosure is to provide a heat-resistant composite sheet which has good flatness and strong abrasion resistance and can be widely applied to heat-resistant, insulating, anti-corrosive, tack-free uses and the like, and has a long service life, and to provide a method for manufacturing the heat-resistant composite sheet, an adhesive tape comprising the heat-resistant composite sheet and a method of manufacturing the same.

### Solution for solving the problem

The invention is defined by claims 1 and 7.

The present application provides a heat-resistant composite sheet which is a glass fiber fabric impregnated with a fluorine-containing resin, wherein, with the glass fiber fabric as a center, the composite sheet has two opposite surfaces in a thickness direction, at least one of which has a surface roughness of Rz ≤ 21 µm and Ra ≤ 7.5 µm.

In the heat-resistant composite sheet according to the present application, the thinnest thickness between the surface having the surface roughness and the glass fiber fabric is 3 to 30 µm.

In the heat-resistant composite sheet according to the present application, the glass fiber fabric has a thickness of 10 to 500 µm.

In the heat-resistant composite sheet according to the present application, with the glass fiber fabric as the center, the composite sheet has two opposite surfaces in the thickness direction, and the ratio of the thinnest thickness between the two surfaces and the glass fiber fabric is 0.5 to 2.0.

In the heat-resistant composite sheet according to the present application, the fluorine-containing resin is one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

The present application further provides a heat-resistant adhesive tape comprising the heat-resistant composite sheet according to the present application, and an adhesive layer provided on at least one surface of the heat-resistant composite sheet.

The present application further provides a method for manufacturing the heat-resistant composite sheet according to the present application, comprising the following steps:
treating a glass fiber fabric with a silicon-containing agent;
impregnating the glass fiber fabric treated as above with a fluorine-containing resin;
heating the glass fiber fabric impregnated with the fluorine-containing resin to form the composite sheet.

In the method for manufacturing the heat-resistant composite sheet according to the present application, after the glass fiber fabric is impregnated with the fluorine-containing resin and before the heating step, the glass fiber fabric impregnated with the fluorine-containing resin is processed with a scraper to control the thickness of the fluorine-containing resin on both sides of the glass fiber fabric.

In the method for manufacturing the heat-resistant composite sheet according to the present application, the step of impregnating the glass fiber fabric with the fluorine-containing resin and the step of heating to form the composite sheet are repeated for 2 to 8 times.

In the method for manufacturing the heat-resistant composite sheet according to the present application, the amount of the silicon-containing agent is 0.05 to 0.2% by weight of the total weight of the glass fiber fabric.

The present application further provides a method for manufacturing the adhesive tape according to the present application, comprising the following steps:
manufacturing a heat-resistant composite sheet according to the method for manufacturing the heat-resistant composite sheet according to the present application;
providing an adhesive layer on at least one surface of the heat-resistant composite sheet.

### Effects of the disclosure

By adjusting the surface roughness of the heat-resistant composite sheet of the disclosure, the abrasion resistance of the composite sheet can be improved, the production efficiency can be improved, and the cost can be reduced.

### BRIEF DESCRIPTION OF THE DRAWINGS

Fig. 1 is a schematic view illustrating a cross-sectional structure of an example of the heat-resistant composite sheet of the disclosure;
Fig. 2 is a schematic view illustrating a cross-sectional structure of an example of a heat-resistant adhesive tape using the heat-resistant composite sheet of the disclosure;
Fig. 3 is an enlarged view illustrating a cross-sectional structure of an example of a heat-resistant adhesive tape using the heat-resistant composite sheet of the disclosure.

### Description of the reference numerals

10 a composite sheet
11 the first surface of the composite sheet
12 the second surface of the composite sheet
13 a glass fiber fabric
14 the thinnest thickness between the first surface of the composite sheet and the glass fiber fabric
15 the thinnest thickness between the second surface of the composite sheet and the glass fiber fabric
20 an adhesive layer

### DETAILED DESCRIPTION

The disclosure will now be described in detail with reference to the drawings.

### [Heat-resistant composite sheet]

### <Composite sheet>

In the disclosure, the composite sheet 10 is a glass fiber fabric impregnated with a fluorine-containing resin, wherein, with the glass fiber fabric 13 as a center, the composite sheet has two opposite surfaces 11 and 12 in the thickness direction, at least one of which has a surface roughness of Rz ≤ 21 µm and Ra ≤ 7.5 µm. Preferably, Rz is ≤ 13 µm, and more preferably, Ra is ≤ 2.9 µm. Preferably, the at least one surface meets Rz ≤ 21 µm and Ra ≤ 7.5 µm at the same time. More preferably, the at least one surface meets Rz ≤ 13 µm and Ra ≤ 2.9 µm at the same time.

It should be noted that, in the disclosure, the two opposite surfaces 11 and 12 both may serve as the opposite first surface and second surface. If one surface is called the first surface, then the other surface is called the second surface, and vice versa, which is not particularly limited.

In the disclosure, the heat-resistant composite sheet is preferably an adhesive tape substrate, an adhesive tape release film, a food transfer belt, a corrosion resistant film, or a durable film for construction.

In the disclosure, the glass fiber fabric 13 is treated with a silicon-containing agent, the treated glass fiber fabric is impregnated with a fluorine-containing resin, and the glass fiber fabric impregnated with the fluorine-containing resin is heated to form the composite sheet 10. The thickness of the composite sheet 10 is, for example, 10 to 500 µm, preferably 40 to 300 µm.

### <Glass fiber fabric>

In the disclosure, the glass fiber fabric is a fabric obtained by weaving glass fiber yarns. The glass strand used as the glass fiber fabric is usually formed by pulling and aligning glass fibers having a diameter of about several microns in units of several hundred. The characteristics of the glass fiber fabric are determined by fiber properties, warp and weft density, yarn structure and texture. The warp and weft density is determined by the yarn structure and texture. The warp and weft density plus the yarn structure determines the physical properties of the fabric, such as weight, thickness and breaking strength. The basic texture is plain, twill, satin, rib and basket. The type and configuration of the glass fiber fabric are not particularly limited. For example, it is preferable to use a glass fiber plain fabric having a basis weight of 15 to 110 g/m², a yarn density of 10 to 100 / 25 mm in the warp direction and the weft direction, and a thickness of about 10 µm to about 500 µm, more preferably about 30 µm to about 250 µm. The glass fiber fabric may be split before use to improve the effect of the subsequent silicon-containing treatment process.

### <Fluorine-containing resin>

In the disclosure, the fluorine-containing resin is not particularly limited, which, for example, is one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

### <Surface roughness Rz>

The surface roughness Rz is measured in accordance with the JIS-B0601-1994 test method. At least one of the two opposite surfaces 11 and 12 of the composite sheet 10 has a surface roughness of Rz ≤ 21 µm, preferably Rz ≤ 13 µm.

### <Surface roughness Ra>

The surface roughness Ra is measured in accordance with the JIS-B0601-1994 test method. At least one of the two opposite surfaces 11 and 12 of the composite sheet 10 has a surface roughness of Ra ≤ 7.5 µm, preferably Ra ≤ 2.9 µm.

The surface roughness of at least one of the two opposite surfaces 11 and 12 of the composite sheet 10 is particularly important for the service life of the composite sheet. When the above surface roughness Rz is > 21 µm, the surface roughness greatly affects the surface abrasion performance, for example, affecting the friction coefficient, affecting the surface stress when the composite sheet is subjected to friction, and thereby causing surface damage phenomenon of the fluorine-containing resin surface layer. Therefore, when Rz is > 21 µm, the surface layer is more likely to cause microcrystalline damage of the surface layer resin, further causing destruction of the entire surface layer resin, resulting in a low service life of the composite sheet.

On the other hand, when Ra is > 7.5 µm, as also the mechanism discovered by the inventors as described above, since the surface roughness greatly affects the surface abrasion performance, for example, affecting the friction coefficient, affecting the surface stress when the composite sheet is subjected to friction, and thereby causing surface damage phenomenon of the fluorine-containing resin surface layer. Therefore, when Ra is > 7.5 µm, the surface layer is more likely to cause microcrystalline damage of the surface layer resin, further causing destruction of the entire surface layer resin, resulting in a low service life of the composite sheet.

Besides, for consideration of manufacturability and service life, the thinnest thickness of the fluorine-containing resin layer on both sides of the glass fiber fabric (the thickness from the outer surface of the composite sheet to the nearest glass fiber) is generally 3 to 30 µm, preferably 5 to 5 30 µm. When the thinnest thickness is less than 3 µm, since the thickness of the fluorine-containing resin layer is too thin, it is very liable to expose the internal glass fibers after abrasion, resulting in irregular surface morphology of the composite sheet, which causes the composite sheet to lose effects such as release and chemical resistance. On the other hand, when the thinnest thickness is more than 30 µm, the thickness of the fluorine-containing resin layer is too thick, resulting in deterioration of workability (mainly resistance to counter force) of the composite sheet during use, and an increase in use cost.

With the glass fiber fabric as the center, the ratio of the thinnest thickness 14 and 15 (vice versa) between the two opposite surfaces 11 and 12 of the composite sheet 10 and the glass fiber fabric 13 is 0.5 to 2.0, preferably 0.8 to 1.3, and more preferably 0.9 to 1.1. When the ratio is less than 0.5, the composite sheet is prone to curling in one direction during processing, resulting in deterioration of the practical use performance of the composite sheet. When the ratio is larger than 2.0, based on the same principle, the composite sheet is prone to curling in one direction during processing, resulting in deterioration of the practical use performance of the composite sheet.

### <Method for manufacturing the composite sheet>

The method for manufacturing the heat-resistant composite sheet according to the disclosure comprises the following steps: treating a glass fiber fabric with a silicon-containing agent (a silicon-containing agent treating step); impregnating the glass fiber fabric treated as above with a fluorine-containing resin (an impregnating step); heating the glass fiber fabric impregnated with the fluorine-containing resin to form the composite sheet (a heating step).

### <Silicon-containing agent treating step>

Silicon-containing agent treatment is a process of treating the glass fiber fabric with a silicon-containing agent. The silicon-containing agent is a class of organosilicon compounds containing two groups having different chemical properties in one molecule, and its structural formula may be represented by a general formula YSiX₃. In this formula, Y is a non-hydrolyzable group, including an alkenyl group (mainly a vinyl group), and a hydrocarbon group having a functional group such as Cl, NH₂, -SH, an epoxy group, N₃, a (meth)acryloyloxy group and an isocyanate group at the end, that is, a carbon functional group; X is a hydrolyzable group, including Cl, OCH₃, OCH₂CH₃, OC₂H₄OCH₃, OSi(CH₃)₃, and the like. Due to the presence of the silicon-containing agent, the glass fiber fabric has a great influence on the flattening property of the fluorine-containing resin material on the surface of the glass fiber fabric and the internal immersion property of the fluorine-containing resin material. In the present application, the amount of the silicon-containing agent is 0.05 to 0.2% by weight based on the total weight of the glass fiber fabric.

### <Impregnating step>

In the impregnating step, the glass fiber fabric may be impregnated with a fluorine-containing resin emulsion.

The fluorine-containing resin emulsion is a polymer resin emulsion in which a polymer main chain is carbon element, and the element bonded to the carbon element is fluorine element. For example, polytetrafluoroethylene (PTFE) emulsion is formed by emulsion polymerization of tetrafluoroethylene (TFE). The content (solid content ratio) of the fluorine-containing resin in the fluorine-containing resin emulsion is preferably from about 40 to about 60% by weight.

In the impregnating step, the glass fiber fabric is impregnated into the fluorine-containing resin emulsion. The impregnation can be carried out, for example, by a method of impregnating the glass fiber fabric in the fluorine-containing resin emulsion, a method of coating the fluorine-containing resin emulsion on the glass fiber fabric, or a method of spraying the fluorine-containing resin emulsion on the glass fiber fabric.

After the aforesaid impregnating step, the glass fiber fabric impregnated with the fluorine-containing resin may be processed with a scraper or a squeegee to separately control the thickness of the fluorine-containing resin on both sides of the glass fiber fabric.

### <Heating step>

In the heating step, the dispersion medium is lost from the fluorine-containing resin emulsion impregnated into the glass fiber fabric in the impregnating step, and the fluorine-containing resin is fused to each other (the emulsion is converted into a fusion body), to form a glass fiber fabric impregnated with the fluorine-containing resin.

The specific method of the heating step is not limited, provided that the glass fiber fabric impregnated with the fluorine-containing resin emulsion can be heated to a temperature equal to or higher than the melting point of the fluorine-containing resin, generally 15°C to 60°C above the melting point of the fluorine-containing resin. For example, when a PTFE emulsion is used, the heating temperature is preferably 330°C to 400°C, and more preferably 340°C to 380°C.

The formed glass fiber fabric may be further repeatedly subject to the impregnating step and the heating step as needed. By this repetition, for example, the thickness of the glass fiber fabric impregnated with the fluorine-containing resin can be increased. The total thickness of the composite sheet formed by the above steps is, for example, 10 to 500 µm, preferably 40 to 300 µm. In general, the impregnating step and the heating step are repeated 2 to 8 times. If too many times of repetitions are performed, the composite sheet may be too thick, so that when the composite sheet is attached to a hot plate having an angle, the counter force is large after the bending, so it is not easy to stick and is easily detached from the adherend.

The method for manufacturing the composite sheet in the disclosure may comprise any steps in addition to the impregnating step and the heating step, as long as the effects of the disclosure can be obtained.

Thereby, a composite sheet in which the fluorine-containing resin is impregnated in the glass fiber fabric is obtained.

Because of the adjustment of the surface roughness, the composite sheet of the disclosure has characteristics of good flatness, strong abrasion resistance, being easy to stick and not easy to be detached from the adherend, and a high production efficiency. The composite sheet of the present application can be used for various applications requiring abrasion resistance, acid and alkali resistance, heat resistance, such as an adhesive tape substrate, an adhesive tape release film, a food conveyor belt, a corrosion resistant film or durable film, thin film, adhesive tape and the like for construction.

Only examples in which the composite sheet of the disclosure is applied to a heat-resistant adhesive tape will be described below, and those skilled in the art can understand that the examples are merely illustrative and not exhaustive.

### [Heat-resistant adhesive tape]

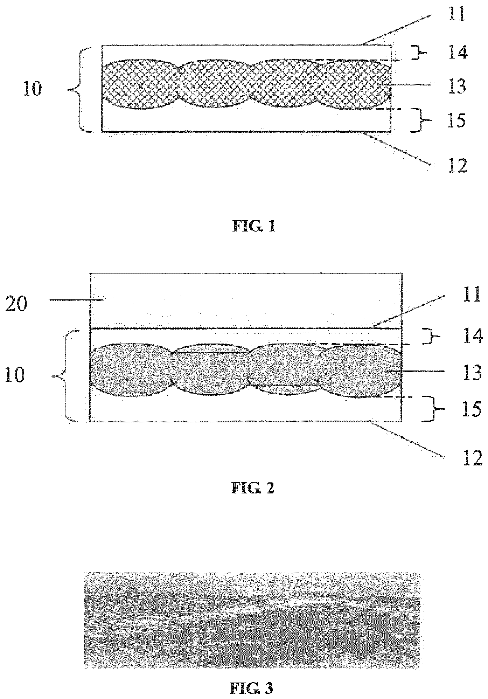

With reference to Fig. 2, the heat-resistant adhesive tape of the disclosure comprises an adhesive layer 20 provided on one surface 11 of the above-mentioned composite sheet. In the disclosure, the heat-resistant adhesive tape may comprise an adhesive layer 20 provided on the other surface 12 of the above-mentioned composite sheet.

### <Adhesive layer>

In the disclosure, the type of the adhesive used for the adhesive layer is not particularly limited, and acrylic, rubber, or silicone-based pressure-sensitive adhesive materials, which are conventionally used in an adhesive layer of an adhesive tape, may be used. From the viewpoint of heat resistance of the adhesive tape, a silicone-based adhesive is preferable.

The thickness of the adhesive layer is usually 5 to 100 µm, preferably 10 to 60 µm. When the thickness is less than 5 µm, the adhesive force is low, and peeling easily occurs during use. When the thickness is more than 100 µm, the thermal conductivity of the adhesive tape used for heat sealing in the thickness direction is lowered, which is not preferable.

### [Method for manufacturing a heat-resistant adhesive tape]

The method for manufacturing a heat-resistant adhesive tape of the disclosure comprises: manufacturing said composite sheet according to the method for manufacturing a composite sheet described above; providing said adhesive layer on one surface (11 or 12) of said composite sheet.

### <Surface treatment step>

The surface treatment step is a treatment for improving the adhesion (anchoring force) between the surface (11 or 12 in the disclosure) on which the adhesive layer is provided in the composite sheet and the adhesive layer provided on the surface. This step may be carried out as needed. The specific method of performing the surface treatment step is the same as the known method carried out in the manufacture of an adhesive tape. The surface treatment step may be carried out, for example, by applying a surface treatment solution (adhesive treatment solution) containing a surface treatment agent (adhesive treatment agent) and a dispersant to the surface on which an adhesive layer is to be provided in the composite sheet.

The surface treatment agent is, for example, a polyester resin, a melamine resin, an acrylic resin, a silicone resin, and a fluorine-containing resin such as PTFE, PFA or ETFE. The dispersant is, for example, toluene, xylene, ethyl acetate, butanol, water, and a mixture thereof.

The surface treatment solution may contain a surface treatment agent and a material other than a dispersant, such as a crosslinking agent, a curing agent, an organic filler, an inorganic filler, and a surfactant. The organic filler is, for example, a powder of a melamine resin, an epoxy resin, or an acrylic resin, and the inorganic filler is, for example, a powder of iron oxide, aluminum oxide, or silica.

In the disclosure, the surface treatment solution is preferably a solution containing a fluorine-containing resin PFA as a surface treatment agent, water as a dispersant, and silica particles as an inorganic filler.

### <Adhesive layer forming step>

In the adhesive layer forming step, an adhesive layer is provided on one surface 11 or 12 of the composite sheet. The specific method of performing the adhesive layer forming step is the same as the known method carried out in the manufacture of an adhesive tape. The adhesive layer forming step, for example, may be carried out by coating an adhesive on one surface 11 or 12 of the composite sheet.

### Examples

In the examples,
(1) The surface roughness Rz and Ra both were measured according to the JIS-B0601-1994 test method.
(2) The abrasion resistance test was carried out by using a Taber abrasion machine, an abrading wheel CS-17, a load of 500 g, and grinding the composite sheet for 1000 times, weighing the weight before and after the abrasion, and calculating the abrasion loss.
(3) The thinnest thickness between the surface of the composite sheet and the glass fiber fabric was measured by the following method: the composite sheet was subject to sectional cut with a cutter and was cut into a sample having a thinness of 20 µm, which was placed under an electron microscope magnified 100 times to observe the section and determine the thinnest thickness between the two surfaces of the composite sheet and the glass fiber fabric. Measurement was carried out at 5 points, and the average value was used.
(4) Whether or not the glass fiber is exposed in the composite sheet was determined by using a Taber abrasion machine, an abrading wheel CS-17, a load of 500 g, and abrading the composite sheet for 500 times, and using a microscope to observe the surface status of the composite sheet in an area of 1 cm × 1 cm after abrasion.
   The status that there was no obvious abrasion and no glass fiber was exposed was evaluated as ⊚,
   The status that there was abrasion on the surface but no glass fiber was exposed was evaluated as o,
   The status that a part of glass fibers were exposed was evaluated as ×;
   The status that abrasion of glass fiber was observed was evaluated as ××.
(5) The evaluation of the curling property of the composite sheet was carried out by taking a composite sheet of 1 m × 15 mm, grasping one end thereof and floating the other end freely, and observing the curling condition of the composite sheet.
   The case where the composite sheet was substantially not curled and substantially kept in a line shape was evaluated as o;
   The case where the composite sheet was merely slightly curled and could be used continuously after being straightened was evaluated as Δ;
   The case where the composite sheet was curled into a plurality of circles was evaluated as ×.

### Example 1

A glass fiber plain fabric having a thickness of 450 µm was treated with a silicon-containing agent, and the amount of the silicon-containing agent was 0.17% by weight based on the total weight of the glass fiber plain fabric. The glass fiber plain fabric treated with the silicon-containing agent was impregnated with a PTFE emulsion having a fluorine-containing resin content (solid content ratio) of about 55% by weight. After the impregnation, the thickness of the PTFE on both sides of the glass fiber was controlled by a scraper. After dehydration, the resultant was sintered at a high temperature of 350°C for 20 seconds. The aforesaid impregnation and sintering were repeated once. The scraper was controlled to adjust the spacing between the glass fibers so that a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.2. In the obtained composite sheet, the adhesive-free surface (i.e., the second surface 12) had a surface roughness Ra of 6.2 µm and a Rz of 32 µm, and the thickness at the thinnest portion between the adhesive-free surface and the glass fiber plain fabric was 3.5 µm.

The abrasion loss of the obtained composite sheet was measured, and the glass fiber exposure condition and curling condition of the composite sheet were observed. The results are shown in Table 1.

### Example 2

The steps in Example 1 were repeated, except for the following differences: a glass fiber plain fabric having a thickness of 30 µm was treated with a silicon-containing agent, and the amount of the silicon-containing agent was 0.09% by weight based on the total weight of the glass fiber plain fabric; in the obtained composite sheet, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 2.5 µm and a Rz of 6.3 µm, and the thickness at the thinnest portion between the adhesive-free surface and the glass fiber plain fabric was 6 µm.

The abrasion loss of the obtained composite sheet was measured, and the glass fiber exposure condition and curling condition of the composite sheet were observed. The results are shown in Table 1.

### Example 3

The steps in Example 1 were repeated, except for the following differences: a glass fiber plain fabric having a thickness of 80 µm was treated with a silicon-containing agent, and the amount of the silicon-containing agent was 0.09% by weight based on the total weight of the glass fiber plain fabric; in the obtained composite sheet, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 2.2 µm and a Rz of 2.4 µm, and the thickness at the thinnest portion between the adhesive-free surface and the glass fiber plain fabric was 9 µm.

The abrasion loss of the obtained composite sheet was measured, and the glass fiber exposure condition and curling condition of the composite sheet were observed. The results are shown in Table 1.

### Example 4

The steps in Example 1 were repeated, except for the following differences: a glass fiber plain fabric having a thickness of 80 µm was treated with a silicon-containing agent; in the obtained composite sheet, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.5; the adhesive-free surface (i.e., the second surface 12) had a surface roughness Ra of 1.6 µm and a Rz of 2.1 µm, and the thickness at the thinnest portion between the adhesive-free surface and the glass fiber plain fabric was 11 µm.

The abrasion loss of the obtained composite sheet was measured, and the glass fiber exposure condition and curling condition of the composite sheet were observed. The results are shown in Table 1.

### Example 5

The steps in Example 1 were repeated, except for the following differences: a glass fiber plain fabric having a thickness of 150 µm was treated with a silicon-containing agent; in the obtained composite sheet, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 0.4 µm and a Rz of 2.0 µm, and the thickness at the thinnest portion between the adhesive-free surface and the glass fiber plain fabric was 20 µm.

The abrasion loss of the obtained composite sheet was measured, and the glass fiber exposure condition and curling condition of the composite sheet were observed. The results are shown in Table 1.

### Comparative example 1

The steps in Example 1 were repeated, except for the following differences: the amount of the silicon-containing agent was 0.02% by weight based on the total weight of the glass fiber plain fabric; in the obtained composite sheet, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 9.8 µm and a Rz of 32.8 µm, and the thickness at the thinnest portion between the adhesive-free surface and the glass fiber plain fabric was 2 µm.

The abrasion loss of the obtained composite sheet was measured, and the glass fiber exposure condition and curling condition of the composite sheet were observed. The results are shown in Table 1.

**Table 1**

| | Fluori ne-con tainin g resin | Second surface Ra(µm) | Second surface Rz(µm) | The thinnest thickness between the second surface and the glass fiber fabric (µm) | Thick ness of the glass fiber fabric (µm) | Ratio of the thinne st thickn ess | Amount of the silicon-c ontainin g agent (% by weight) | Abrasi on loss (mg) | Exposure of glass fiber | Curling property |
|---|---|---|---|---|---|---|---|---|---|---|
| Example 1 | PTFE | 6.2 | 32 | 3.5 | 450 | 1.2 | 0.17 | 40 | ∘ | ∘ |
| Example 2 | PTFE | 2.5 | 6.3 | 6 | 30 | 1.0 | 0.09 | 14 | ⊚ | ∘ |
| Example 3 | PTFE | 2.2 | 2.4 | 9 | 80 | 1.0 | 0.09 | 11 | ⊚ | ∘ |
| Example 4 | PTFE | 1.6 | 2.1 | 11 | 80 | 1.5 | 0.17 | 9 | ⊚ | Δ |
| Example 5 | PTFE | 0.4 | 2.0 | 20 | 150 | 1.0 | 0.17 | 8 | ⊚ | ∘ |
| | | | | | | | | | | |
| Comparative example 1 | PTFE | 9.8 | 32.8 | 2 | 450 | 1.0 | 0.02 | 85 | ×× | o |

From the above examples and comparative example, it was evident that in the disclosure, by making the surface roughness Rz ≤ 21 µm and Ra ≤ 7.5 µm of at least one surface of the composite sheet, the resultant composite sheet could have excellent abrasion resistance and curling property, and no fiber was exposed. On the contrary, the composite sheet which did not satisfy the surface roughness condition of the disclosure had poor abrasion resistance, and a part of the fibers in the composite sheet were exposed or abraded.

## Claims

1. A heat-resistant composite sheet (10) which is a glass fiber fabric (13) impregnated with a fluorine-containing resin, wherein, with the glass fiber fabric as a center, the composite sheet has two opposite surfaces (11, 12) in a thickness direction, at least one of which has a surface roughness, as measured in accordance with the JIS-B0601-1994 test method, of Rz ≤ 21 µm and Ra ≤ 7.5 µm,
wherein the glass fiber fabric is treated with a silicon-containing agent represented by a general formula YSiX₃, wherein Y represents a non-hydrolyzable group, including an alkenyl group, and a hydrocarbon group having a functional group selected from Cl, NH₂, -SH, an epoxy group, N₃, a (meth)acryloyloxy group and an isocyanate group at the end; X represents a hydrolyzable group, including Cl, OCH₃, OCH₂CH₃, OC₂H₄OCH₃, and OSi(CH₃)₃, and
wherein the amount of the silicon-containing agent is 0.05 to 0.2% by weight based on the total weight of the glass fiber fabric.

2. The heat-resistant composite sheet according to claim 1, wherein the thinnest thickness between the surface having the surface roughness and the glass fiber fabric is 3 to 30 µm.

3. The heat-resistant composite sheet according to claim 1 or 2, wherein the glass fiber fabric has a thickness of 10 to 500 µm.

4. The heat-resistant composite sheet according to claim 1 or 2, wherein, with the glass fiber fabric as the center, the composite sheet has two opposite surfaces in the thickness direction, and the ratio of the thinnest thickness between the two surfaces and the glass fiber fabric is 0.5 to 2.0.

5. The heat-resistant composite sheet according to claim 1 or 2, wherein the fluorine-containing resin is one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

6. A heat-resistant adhesive tape, comprising the heat-resistant composite sheet according to any one of claims 1 to 5, and an adhesive layer provided on at least one surface of the heat-resistant composite sheet.

7. A method for manufacturing the heat-resistant composite sheet (10) according to any one of claims 1 to 5, comprising the following steps:
treating a glass fiber fabric (13) with a silicon-containing agent represented by a general formula YSiX₃, wherein Y represents a non-hydrolyzable group, including an alkenyl group, and a hydrocarbon group having a functional group selected from Cl, NH₂, -SH, an epoxy group, N₃, a (meth)acryloyloxy group and an isocyanate group at the end; X represents a hydrolyzable group, including Cl, OCH₃, OCH₂CH₃, OC₂H₄OCH₃, and OSi(CH₃)₃; wherein the amount of the silicon-containing agent is 0.05 to 0.2% by weight based on the total weight of the glass fiber fabric;
impregnating the glass fiber fabric treated as above with a fluorine-containing resin;
heating the glass fiber fabric impregnated with the fluorine-containing resin to form the composite sheet.

8. The method for manufacturing the heat-resistant composite sheet according to claim 7, wherein after the glass fiber fabric is impregnated with the fluorine-containing resin and before the heating step, the glass fiber fabric impregnated with the fluorine-containing resin is processed with a scraper to control the thickness of the fluorine-containing resin on both sides of the glass fiber fabric.

9. The method for manufacturing the heat-resistant composite sheet according to claim 7 or 8, wherein the step of impregnating the glass fiber fabric with the fluorine-containing resin and the step of heating to form the composite sheet are repeated for 2 to 8 times.

10. A method for manufacturing the adhesive tape according to claim 6, comprising the following steps:
manufacturing a heat-resistant composite sheet according to the method for manufacturing the heat-resistant composite sheet according to any one of claims 7 to 9; and
providing an adhesive layer (20) on at least one surface of the heat-resistant composite sheet

## Patentansprüche

1. Hitzebeständige Verbundfolie (10), welche ein Glasfasergewebe (13) ist, das mit einem fluorhaltigen Harz imprägniert ist, wobei die Verbundfolie mit dem Glasfasergewebe als ein Zentrum zwei gegenüberliegende Oberflächen (11, 12) in einer Dickenrichtung aufweist, von denen mindestens eine eine Oberflächenrauheit von Rz ≤ 21 µm und Ra ≤ 7,5 µm aufweist, wie gemessen nach dem JIS-B0601-1994 Testverfahren,
wobei das Glasfasergewebe mit einem siliziumhaltigen Mittel behandelt wird, das durch eine allgemeine Formel YSiX₃ dargestellt ist, wobei Y eine nichthydrolisierbare Gruppe darstellt, beinhaltend eine Alkenylgruppe und eine Kohlenwasserstoffgruppe mit einer funktionellen Gruppe am Ende, ausgewählt aus Cl, NH₂, -SH, einer Epoxidgruppe, N₃, einer (Meth)acryloyloxy-Gruppe und einer Isocyanatgruppe; X eine hydrolisierbare Gruppe darstellt, beinhaltend Cl, OCH₃, OCH₂CH₃, OC₂H₄OCH₃ und OSi(CH3)3, und
wobei die Menge des siliziumhaltigen Mittels 0,05 bis 0,2 Gew.-% bezogen auf das Gesamtgewicht des Glasfasergewebes ist.

2. Hitzebeständige Verbundfolie nach Anspruch 1, wobei die dünnste Dicke zwischen der Oberfläche mit der Oberflächenrauheit und dem Glasfasergewebe 3 bis 30 µm ist.

3. Hitzebeständige Verbundfolie nach Anspruch 1 oder 2, wobei das Glasfasergewebe eine Dicke von 10 bis 500 µm aufweist.

4. Hitzebeständige Verbundfolie nach Anspruch 1 oder 2, wobei die Verbundfolie mit dem Glasfasergewebe als dem Zentrum zwei gegenüberliegende Oberflächen in der Dickenrichtung aufweist und das Verhältnis der dünnsten Dicke zwischen den beiden Oberflächen und dem Glasfasergewebe 0,5 bis 2,0 ist.

5. Hitzebeständige Verbundfolie nach Anspruch 1 oder 2, wobei das fluorhaltige Harz eines oder mehrere von Polytetrafluorethylen (PTFE), Perfluor(alkoxyalkan) (PFA), Perfluorethylen-Propylen-Copolymer (FEP), Ethylen-Tetrafluorethylen-Copolymer (ETFE) und Polyvinylidenfluorid (PVdF) ist.

6. Hitzebeständiges Klebeband, umfassend die hitzebeständige Verbundfolie nach einem der Ansprüche 1 bis 5 und eine Klebeschicht, die auf mindestens einer Oberfläche der hitzebeständigen Verbundfolie bereitgestellt ist.

7. Verfahren zum Herstellen der hitzebeständigen Verbundfolie (10) nach einem der Ansprüche 1 bis 5, umfassend die folgenden Schritte:
Behandeln eines Glasfasergewebes (13) mit einem siliziumhaltigen Mittel, das durch eine allgemeine Formel YSiX₃ dargestellt ist, wobei Y eine nichthydrolisierbare Gruppe darstellt, beinhaltend eine Alkenylgruppe und eine Kohlenwasserstoffgruppe mit einer funktionellen Gruppe am Ende, ausgewählt aus Cl, NH₂, -SH, einer Epoxidgruppe, N₃, einer (Meth)acryloyloxy-Gruppe und einer Isocyanatgruppe; X eine hydrolisierbare Gruppe darstellt, beinhaltend Cl, OCH₃, OCH₂CH₃, OC₂H₄OCH₃ und OSi(CH₃)₃; wobei die Menge des siliziumhaltigen Mittels 0,05 bis 0,2 Gew.-% bezogen auf das Gesamtgewicht des Glasfasergewebes ist;
Imprägnieren des Glasfasergewebes, das wie oben behandelt ist, mit einem fluorhaltigen Harz;
Erwärmen des Glasfasergewebes, das mit dem fluorhaltigen Harz imprägniert ist, um die Verbundfolie zu bilden.

8. Verfahren zum Herstellen der hitzebeständigen Verbundfolie nach Anspruch 7, wobei das Glasfasergewebe, das mit dem fluorhaltigen Harz imprägniert ist, nachdem das Glasfasergewebe mit dem fluorhaltigen Harz imprägniert wurde und vor dem Schritt des Erwärmens, mit einem Spachtel bearbeitet wird, um die Dicke des fluorhaltigen Harzes auf beiden Seiten des Glasfasergewebes zu steuern.

9. Verfahren zum Herstellen der hitzebeständigen Verbundfolie nach Anspruch 7 oder 8, wobei der Schritt des Imprägnierens des Glasfasergewebes mit dem fluorhaltigen Harz und der Schritt des Erwärmens, um die Verbundfolie zu bilden, 2 bis 8 Mal wiederholt werden.

10. Verfahren zum Herstellen des Klebebands nach Anspruch 6, umfassend die folgenden Schritte:
Herstellen einer hitzebeständigen Verbundfolie nach dem Verfahren zum Herstellen der hitzebeständigen Verbundfolie nach einem der Ansprüche 7 bis 9; und
Bereitstellen einer Klebeschicht (20) auf mindestens einer Oberfläche der hitzebeständigen Verbundfolie.

## Revendications

1. Feuille composite thermorésistante (10) qui est un tissu en fibres de verre (13) imprégné d'une résine contenant du fluor, dans laquelle, avec le tissu en fibres de verre en tant que centre, la feuille composite a deux surfaces opposées (11, 12) dans une direction d'épaisseur, dont au moins une a une rugosité de surface, telle que mesurée conformément à la méthode d'essai JIS-B0601-1994, de Rz ≤ 21 µm et Ra ≤ 7,5 µm,
dans laquelle le tissu en fibres de verre est traité avec un agent contenant du silicone représenté par une formule générale YSiX₃, dans laquelle Y représente un groupe non hydrolysable, y compris un groupe alkényle, et un groupe hydrocarbure ayant un groupe fonctionnel sélectionné parmi Cl, NH₂, -SH, un groupe époxy, N₃, un groupe (méth)acryloyloxy et un groupe isocyanate à l'extrémité ; X représente un groupe hydrolysable, y compris Cl, OCH₃, OCH₂CH₃, OC₂H₄OCH₃ et OSi(CH₃)₃, et
dans laquelle la quantité de l'agent contenant du silicone est de 0,05 à 0,2 % en poids basée sur le poids total du tissu en fibres de verre.

2. Feuille composite thermorésistante selon la revendication 1, dans laquelle l'épaisseur la plus fine entre la surface ayant la rugosité de surface et le tissu en fibres de verre est de 3 à 30 µm.

3. Feuille composite thermorésistante selon la revendication 1 ou 2, dans laquelle le tissu en fibres de verre a une épaisseur de 10 à 500 µm.

4. Feuille composite thermorésistante selon la revendication 1 ou 2, dans laquelle, avec le tissu en fibres de verre en tant que centre, la feuille composite a deux surfaces opposées dans la direction d'épaisseur, et le rapport de l'épaisseur la plus fine entre les deux surfaces et le tissu en fibres de verre est de 0,5 à 2,0.

5. Feuille composite thermorésistante selon la revendication 1 ou 2, dans laquelle la résine contenant du fluor est un ou plusieurs composés parmi le polytétrafluoroéthylène (PTFE), le perfluoro(alcoxy alcane) (PFA), un copolymère de perfluoroéthylène-propylène (FEP), un copolymère d'éthylène-tétrafluoroéthylène (ETFE) et le fluorure de polyvinylidène (PVdF).

6. Ruban adhésif thermorésistant, comprenant la feuille composite thermorésistante selon l'une quelconque des revendications 1 à 5, et une couche adhésive prévue sur au moins une surface de la feuille composite thermorésistante.

7. Procédé de fabrication de la feuille composite thermorésistante (10) selon l'une quelconque des revendications 1 à 5, comprenant les étapes suivantes :
traiter un tissu en fibres de verre (13) avec un agent contenant du silicone représenté par une formule générale YSiX₃, dans laquelle Y représente un groupe non hydrolysable, y compris un groupe alkényle, et un groupe hydrocarbure ayant un groupe fonctionnel sélectionné parmi Cl, NH₂, -SH, un groupe époxy, N₃, un groupe (méth)acryloyloxy et un groupe isocyanate à l'extrémité ; X représente un groupe hydrolysable, y compris Cl, OCH₃, OCH₂CH₃, OC₂H₄OCH₃ et OSi(CH₃)₃ ; dans lequel la quantité de l'agent contenant du silicone est de 0,05 à 0,2 % en poids basée sur le poids total du tissu en fibres de verre ;
imprégner le tissu en fibres de verre traité comme ci-dessus d'une résine contenant du fluor ;
chauffer le tissu en fibres de verre imprégné de la résine contenant du fluor pour former la feuille composite.

8. Procédé de fabrication de la feuille composite thermorésistante selon la revendication 7, dans lequel après que le tissu en fibres de verre est imprégné de la résine contenant du fluor et avant l'étape de chauffage, le tissu en fibres de verre imprégné de la résine contenant du fluor est usiné avec un racloir pour contrôler l'épaisseur de la résine contenant du fluor sur les deux côtés du tissu en fibres de verre.

9. Procédé de fabrication de la feuille composite thermorésistante selon la revendication 7 ou 8, dans lequel l'étape d'imprégnation du tissu en fibres de verre de la résine contenant du fluor et l'étape de chauffage pour former la feuille composite sont répétées 2 à 8 fois.

10. Procédé de fabrication du ruban adhésif selon la revendication 6, comprenant les étapes suivantes :
fabriquer une feuille composite thermorésistante conformément au procédé de fabrication de la feuille composite thermorésistante selon l'une quelconque des revendications 7 à 9 ; et
fournir une couche adhésive (20) sur au moins une surface de la feuille composite thermorésistante.
